**Europäisches Patentamt**

**European Patent Office**

**Office européen des brevets**

(11) Publication number: **0 034 060**
A1

# EUROPEAN PATENT APPLICATION

(21) Application number: **81300512.1**

(22) Date of filing: **06.02.81**

(51) Int. Cl.³: **B 41 J 3/04**

(30) Priority: **08.02.80 US 119711**

(43) Date of publication of application: **19.08.81**
Bulletin 81/33

(84) Designated Contracting States: **DE FR GB IT NL**

(71) Applicant: **THE MEAD CORPORATION, Mead World Headquarters Courthouse Square Plaza N.E, Dayton, Ohio 45463 (US)**

(72) Inventor: **Kockler, Barry Curtis, 450 Cross Timers, Lewisville Texas (US)**

(74) Representative: **Warren, Keith Stanley et al, Baron & Warren 16 Kensington Square, London W8 5HL (GB)**

(54) **Ink jet printer.**

㊛ An ink jet printer for depositing drops along a plurality of print lines (10) on a moving print receiving medium (12) to form a print image thereon includes print heads (14, 16) for generating jet drop streams directed at the print receiving medium to strike the medium at print positions (21) arranged in first and second rows (22, 24). Drops deposited at print positions (21) in the first row (22) form a first group (26) of print lines on the medium and drops deposited at print positions (21) in the second row (24) form a second group (28) of print lines on the medium, with the first and second groups of print lines overlapping. Drops deposited at the first row of print positions are deposited along print lines to one side of a stitch point (32), while drops deposited at the second row of print positions are deposited along print lines to the other side of the stitch point (32). Means is provided for varying the stitch point during printing.

-1-

## Ink Jet Printer

The present invention relates to a multiple row ink jet printer and, more particularly, to such a printer in which drops deposited at print positions in a first row define a first plurality of associated print lines adjacent to a second plurality of print lines defined by drops deposited at print positions in a second row.

A number of ink jet printers in the past have utilized a single row of jet drop streams to deposit drops selectively at respective print positions, thereby defining corresponding print lines on a moving print receiving medium. The drops so deposited collectively form a print image on the medium. For a number of reasons, however, it has been desirable in certain printers to utilize two or more rows of jet drop streams in printing. Where a relatively wide print receiving medium is to be printed, the use of several print heads, each extending across a portion of the width of the medium, substantially reduces problems associated with stimulation of jet drop break up in an exceptionally long print head.

Also, if a high resolution print image is required, closer effective interjet spacing can be provided by utilizing a print head which is skewed with respect to the direction of movement of the print receiving medium. It will be appreciated, however, that with such a skewed single row printer the data delay required between the first, "upstream" jet and the last, "downstream" jet can present substantial timing problems. The required data delays may be reduced, however, by using a multiple row printer as shown in U.S. Patent No. 4,010,477, issued March 1, 1977, to Frey.

0034060

While the Frey patent discloses generation of multiple rows of jet drop streams with a single print head, it may be desirable to use a separate print head for generation of each of the rows, especially where each of the rows is relatively long. A multiple print head printer also reduces the print signal timing delay problems, but is disadvantageous in that the respective lateral position of each of the print heads across the width of the print receiving medium is critical. If the print heads are not properly aligned, an unprinted white streak will be produced which extends along the print receiving medium in the direction of movement of the medium.

A similar problem is encountered in printers of the type shown in U.S. Patent No. 4,122,458, issued October 24, 1978, to Paranjpe in which each of a plurality of jet drop streams is directed to deposit drops at a plurality of print positions associated with adjacent print lines. With such an arrangement, if the print lines serviced by a pair of adjacent jet drop streams are not precisely positioned, a noticeable unprinted white stripe extending in the direction of movement of the print receiving medium can result. One approach to this problem is shown in U.S. Patent No. 4,060,804, issued November 29, 1977, to Yamada. The Yamada patent discloses a printer in which each of a pair of jet nozzles deposits drops along an associated number of print lines. The "seam" between the print lines serviced by the nozzles is accurately located by virtue of the fact that the print lines adjacent the "seam" are serviced by drops from the jets which are deflected the least. The Yamada concept, however, is only applicable to a two-jet printer.

Another approach to this problem is disclosed in U.S. patent application, Serial No. 934,351, filed August 17, 1978, by Paranjpe, and assigned to the assignee of the present invention. The Paranjpe printer is arranged such that a number of the print lines serviced by each of the jet drop streams overlap print lines serviced by adjacent jet drop streams. Identical print control signals, suitably timed, are used to control printing simultaneously by the various jets along the overlapping print lines.

While this eliminates the possibility of unprinted white streaks being produced along the print receiving medium where adjacent print lines serviced by adjacent jets are not precisely aligned laterally, this technique does not reduce print image distortion which can result from timing errors in print control signals supplied to adjacent jet drop streams. It will be appreciated that where the rows of print positions are displaced along the print receiving medium in the direction of movement of the medium, appropriate data delays must be provided in the circuits controlling operation of the jets so that the portion of the print image produced by drops deposited along a band of print lines is properly aligned with the portion of the print image produced by drops deposited on adjacent bands of print lines. While the spacing between the print positions for overlapping print lines in the device disclosed in the Paranjpe application is relatively small and, therefore, image alignment is not a significant problem in this device, where several separate print heads are displaced along a print receiving medium by substantial distances, the difficulties encountered in alignment of the print image bands in the direction of print medium movement is significantly increased.

0034060

Accordingly, it is seen that there is a need for an arrangement by which the apparent image degradation resulting from misalignment between plural rows of print positions at which drops are deposited on a moving print receiving medium may be reduced.

According to one aspect of the present invention, an ink jet printer for depositing drops along a plurality of print lines on a moving print receiving medium to form a print image thereon includes print head means for generating jet drops directed at the print receiving medium to strike the print receiving medium at print positions arranged in first and second rows. Drops are selectively deposited at the first row of print positions along associated ones of a first group of print lines in response to print control signals. Drops are selectively deposited at print positions in the second row along associated ones of a second group of print lines in response to print control signals. A number of the print lines in the first group overlap a corresponding number of print lines in the second group, with the print positions in the second row associated with overlapping print lines being displaced in the direction of movement of the print receiving medium from the print positions in the first row which are associated with overlapping print lines. A plurality of print control signals are provided by appropriate means, with each print control signal controlling printing along an associated one of the print lines by the print head means. A dither means is responsive to the means for providing print control signals for supplying the print control signals to the print head means such that selected ones of the overlapping print lines are printed by deposition of drops at the first row of print positions and the remaining ones
of the overlapping print lines are printed by deposition of drops at the second row of print positions. The print lines printed by deposition of
drops at each of the rows of print positions are
varied during printing of the print image.

The dither means may comprise means for
supplying print control signals to control printing
by deposition of drops at the first row of print
positions along print lines to one side of a stitch
point and for supplying print control signals to
control printing by deposition of drops at the
second row of print positions along print lines to
the other side of the stitch point. The stitch
point is thereby varied during printing of the print
image.

The dither means may comprise first gating
means for supplying print control signals to the
print head means to control deposition of drops at
the first row of print positions along the overlapping print lines in response to gating control
signals. The dither means may further comprise
second gating means for supplying print control
signals to the print head means to control deposition of drops at the second row of print positions
along the overlapping print lines in response to
gating control signals. Print control signals are
supplied to the first gating means and delayed print
control signals are supplied to the second gating
means. The dither means further includes means for
providing varying gating control signals to the
first and second gating means, whereby the overlapping print lines of the image are printed by depositing drops at varying ones of the first and second
rows of print positions. The gating control signals
may be varied randomly or, alternatively, varied
cyclically.

The means for providing varying gating control signals may comprise gating control signal generator means for sequentially generating a first set of gating control signals and means, responsive to said gating control signal generator means, for supplying said first set of gating control signals to the first gating means for controlling deposit of drops at the first row of print positions along the overlapping print lines. A delay means is responsive to the gating control signal generator means for delaying a second set of gating control signals by a predetermined time period. A means is responsive to the delay means for supplying the second set of gating control signals to the second gating means for controlling deposit of drops at the second row of print positions along the overlapping print lines. The first set of gating control signals may be the complement of the second set of gating control signals.

Accordingly, it is an object of the present invention to provide an ink jet printer and method in which drops are deposited at plural rows of print positions on a print receiving medium, with the drops deposited at each print position defining a print line and with a number of the print lines associated with each of the rows of print positions overlapping print lines associated with others of the rows of print positions; to provide such an ink jet printer and method in which print lines to one side of a stitching point are serviced by the deposition of drops at one of the rows of print positions and print lines on the other side of the stitching point are serviced by drops deposited at print positions in another of the rows of print positions; to provide such an ink jet printer and method in which the stitching point is varied during printing; and to provide such an ink jet printer and method in which the stitching point is varied either randomly or cyclically during printing.

Other objects and advantages of the invention will be apparent from the following description, the accompanying drawings and the appended claims.

In order that the invention may be more readily understood, reference will now be made to the accompanying drawings, in which:

Fig. 1 is a perspective view of a multiple row ink jet printer constructed according to the present invention;

Fig. 2 is an enlarged partial plan view of the printer, diagrammatically illustrating a varying stitching point;

Fig. 3 is a view, similar to Fig. 2, of a printer in which no print line overlap is provided;

Figs. 4, 5, 6, and 7 are electrical schematic diagrams illustrating one embodiment of the printer control circuitry; and

Figs. 8, 9, and 10 are electrical schematic diagrams illustrating a second embodiment of the printer control circuitry.

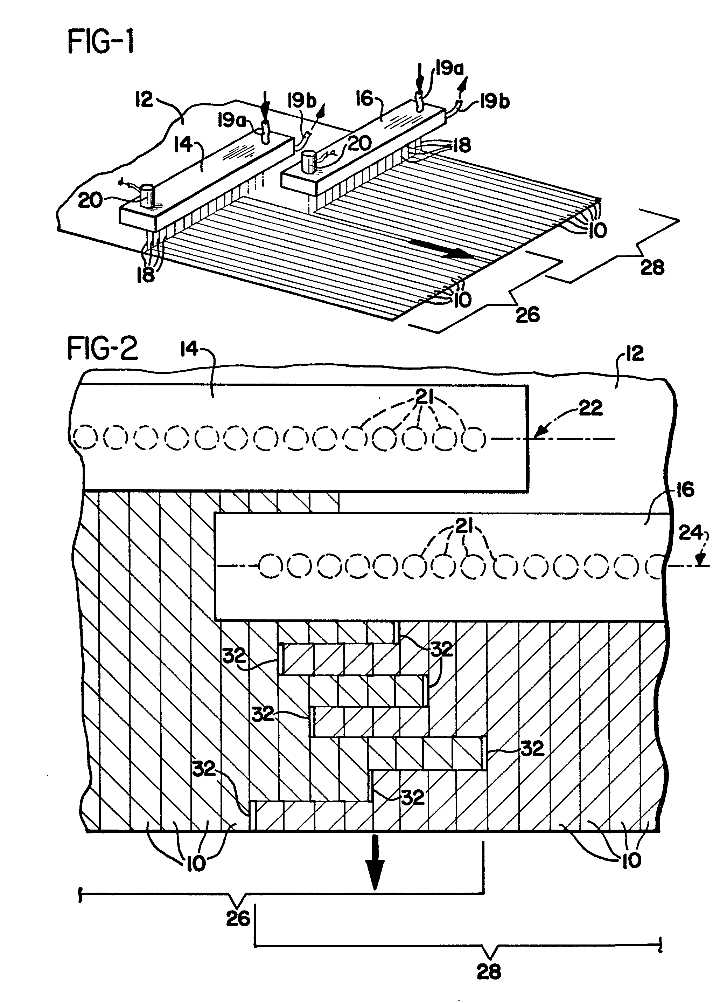

Fig. 1 illustrates an ink jet printer embodying the present invention which deposits drops along a plurality of print lines, indicated diagrammatically at 10, on a moving print receiving medium 12 to form an image thereon. A print head means, including print heads 14 and 16, generates jet drop streams 18 directed at the print receiving medium 12 to strike the medium 12 at print positions 21, illustrated diagrammatically in Fig. 2, which are arranged in first and second rows 22 and 24, respectively.

Print heads 14 and 16 each may be generally of the type disclosed in U.S. patent No. 3,701,998, issued October 31, 1972, or U.S. patent No. 3,586,907, issued June 22, 1971, to Beam et al. In ink jet print heads of the type disclosed therein, ink emerges from a fluid reservoir through a plurality of orifices, forming a plurality of jet drop streams which are arranged in one or more rows. The drops in each of the jet drop streams are selectively charged and, thereafter, pass through an electrostatic field which deflects the trajectories of the charged drops such that they strike a drop catcher and do not reach a print receiving medium. The uncharged drops, however, pass through the field unaffected and strike the print receiving medium such that they collectively form a print image. If desired, other types of ink jet print heads may be utilized.

Ink may be supplied to the print heads via supply lines 19a and removed therefrom at shut down of the print heads via lines 19b. Drop formation may be enhanced by piezoelectric transducers 20 in a known manner.

Drops are selectively deposited at the first row 22 of print positions along associated ones of a first group 26 of print lines in response to print control signals supplied to the print head 14. Similarly, drops are selectively deposited at print positions in the second row 24 along associated ones of a second group 28 of print lines in response to print control signals supplied to print head 16. As seen in Figs. 1 and 2, a number of the first group of print lines 26 overlap a corresponding number of the second group of print lines 28. The print positions in the second row 24 which are associated with overlapping print lines are displaced in the direction of movement of the print receiving medium 12 from the print positions in first row 22 which are associated with the overlapping print lines.

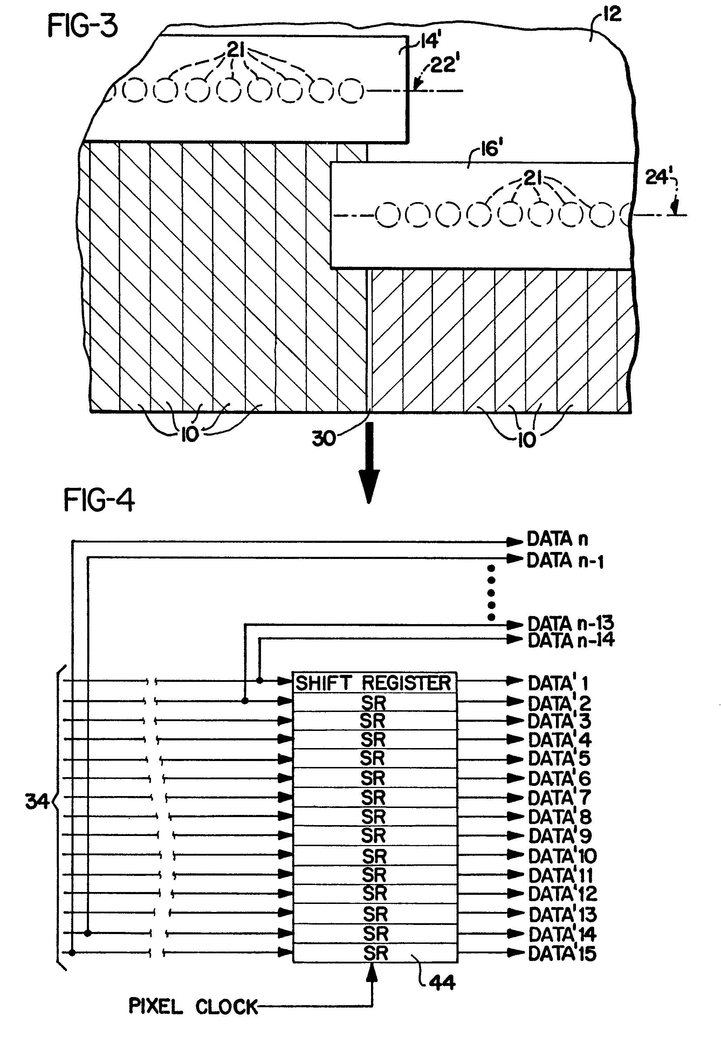

Where it is desired to deposit drops at several rows of print positions, with the rows being displaced along the print receiving medium in the direction of movement of the medium, the printer of the present invention produces a substantially improved print image. Fig. 3 illustrates a nonoverlapping printer in which print lines 10 are formed by the deposition of drops at print positions 21, which print positions are arranged in a pair of rows 22' and 24'. In such a printer, drops deposited by print head 14' form print lines 10 which do not overlap with the print lines formed by the drops deposited on the medium 12 by print head 16'. The lateral alignment of the print heads 14' and 16' is therefore extremely crucial since, as shown in Fig. 3, a slight lateral misalignment between the printers can result in a white unprinted strip 30 being formed which extends along the print medium 12 in the direction of movement of the medium. This unprinted strip occurs at the stitching point, that is the transition point between print lines printed by the two printers, in general will be very noticeable. In order to eliminate such a white strip at the stitching point of a printer of the type shown in Fig. 3, it would be necessary to align the print heads 14' and 16' precisely. Such precise alignment is difficult to obtain and may not always be possible.

In order to improve the appearance of the print image without necessitating an increase in the precision with which the print heads are aligned, the print heads 14 and 16 are positioned, as shown in Fig. 2, with a number of the print lines serviced by the first print head 14 overlapping print lines serviced by the second print head 16. At any selected point along an overlapping print line, it receives drops from only one of the print heads. If this were not the case, twice as much ink would be deposited on the overlapping print lines as is deposited on the nonoverlapping print lines. By providing for print line overlap, however, selected jets at the end of each of the print heads 14 and 16 are switched into a continuous catch state such that the jets do not deposit ink drops along their associated print lines. The stitching point between the print lines serviced by the two printers is, therefore, located at a selected point between two adjacent print lines in the overlapping group. By properly controlling the print heads, the lateral position of the stitching point 32 is varied, as seen in Fig. 2, such that a dispersed series of unprinted stitching points is provided.

Although the print heads 14 and 16 shown in Fig. 2 have the same degree of lateral misalignment as the print heads 14' and 16' shown in Fig. 3, the image produced by the overlap arrangement of Fig. 2 is much more pleasing to the eye, since the unprinted stitch points are dispersed and are therefore much less noticeable. Additionally, if there is a vertical misalignment between the portion of the image printed by print head 14 and the portion of the image printed by print head 16, the arrangement of Fig. 2 makes this misalignment much less noticeable, since there is a laterally varied seam between the image portions, rather than a sharp, straight seam.

Figs. 4-7 collectively illustrate a circuit for controlling operation of the printer of the present invention. Means for providing a plurality of print control signals includes lines 34, with each print control signal on lines 34 controlling printing by print heads 14 and 16 along an associated one of the overlapping print lines. The print control signals may be supplied to lines 34 by an optical scanning device or, alternatively, by a data processing system in which information defining the print image is stored. These print control signals are supplied ultimately to amplifiers 36 and 38 which provide charging signals to the charging electrodes of print heads 14 and 16, respectively. Note that each printer produces n jets and that jets 1 through 15 of print head 16 service print lines which overlap with print lines serviced by jets n-14 through n of print head 14, respectively.

The circuitry shown in Figs. 4-6 constitutes a dither means which supplies the print control signals to the print heads 14 and 16, such that selected ones of the overlapping print lines are serviced by deposition of drops at print positions in row 22 and the remaining ones of the overlapping print lines are serviced by deposition of drops at print positions in row 24. The print lines printed by deposition of drops at each of the rows of print positions are varied during printing of the print image. As a result, drops are deposited at the first row of print positions along print lines to one side of a stitch point and deposited at the second row of print positions along print lines to the other side of the stitch point. The stitch point is varied during printing of the print image, either in a random manner or in a cyclic manner.

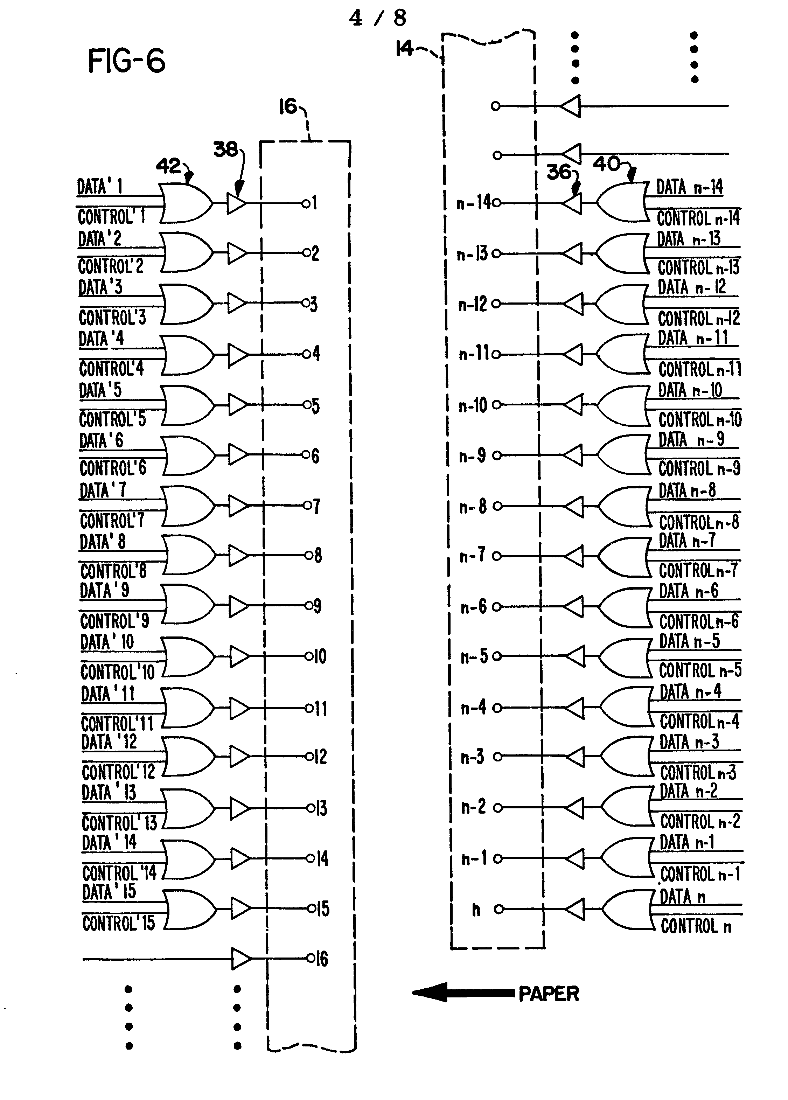

As seen in Fig. 6, the dither means comprises a first gating means, consisting of OR gates 40 for supplying print control signals to print head 14 to control deposition of drops at the first row of print positions along the overlapping print lines in response to gating control signals on the CONTROL lines. A second gating means, consisting of OR gates 42, supplies print control signals to printer 16 to control deposition of drops at the second row of print positions along overlapping print lines in response to gating control signals on the CONTROL' lines. The DATA n-14 through DATA n lines in Fig. 4 provide a means for supplying of print control signals to the first gating means including OR gates 40.

Shift registers 44 provide a means for supplying delayed print control signals CONTROL'1 through CONTROL'15 to the second gating means including OR gates 42. Shift registers 44 are each associated with a respective one of the print control signal lines 34. The shift registers 44 each include a plurality of stages, with the number of stages corresponding to the pixel displacement between the rows of print positions 22 and 24. By clocking the shift registers at the pixel clock rate, the necessary data delay is provided to compensate for the displacement between the two rows of print positions and the time required for the print receiving medium to be moved between the rows of print positions. Thus, the same print control signals are provided to the first and second gating means, with an appropriate delay, so that the gating means may be switched to control printing along overlapping print lines with selected jets from print heads 14 and 16.

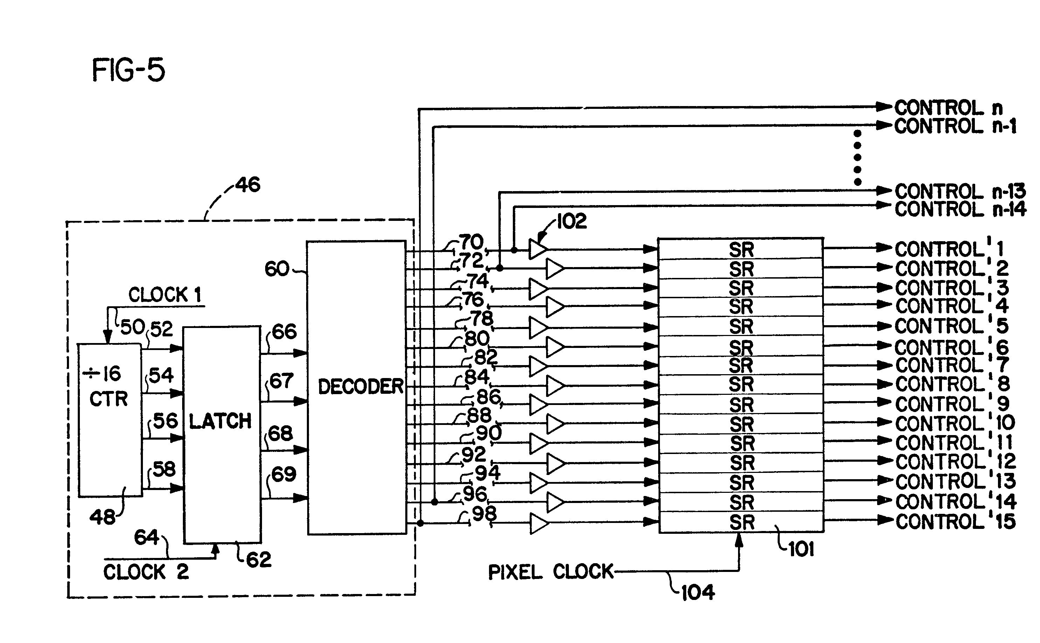

Fig. 5 illustrates a means for providing varying gating control signals, CONTROL and CONTROL', to the first and second gating means, respectively, whereby the overlapping print lines of the print image are printed by depositing drops at varying ones of the first and second rows of print positions. A gating control signal generator means 46 sequentially generates a first set of gating control signals, CONTROL n-14 through CONTROL n, which are supplied to OR gates 40. The circuit 46 includes a divide-by-16 counter 48, which may be a Texas Instruments SN74163 counter, which receives clock input signals on line 50 such that it is rapidly cycled through sixteen counting states. The output of counter 48 on lines 52-58 thus continually cycles through binary numbers 0-15. Decoder 60 receives the counter outputs via clocked latch 62, which may be a Texas Instruments SN74175 counter. Latch 62 is enabled by a clock signal on line 64. Decoder 60 provides an output on lines 70-98 in dependence upon the binary number supplied thereto on lines 66, 67, 68, and 69. This output constitutes the first set of gating control signals which controls deposit of drops at the first row of print positions along the overlapping print lines. The clock signal supplied on line 64 is typically a pixel rate signal such that the outputs from decoder 60 are altered during each pixel time period.

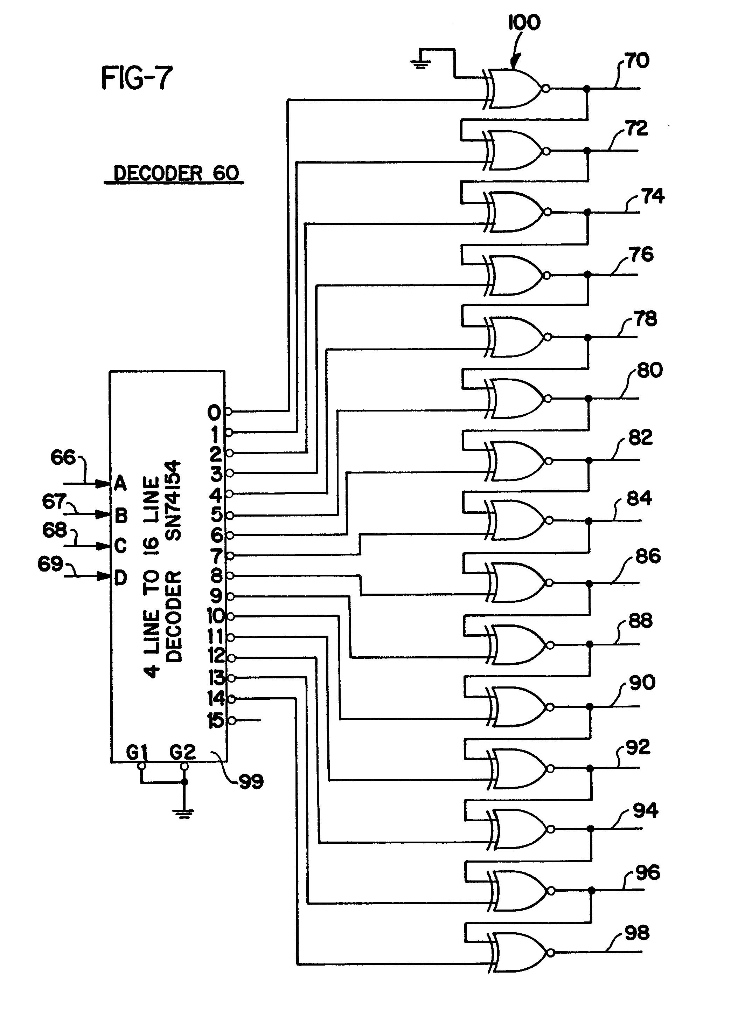

Decoder 60 is illustrated in greater detail in Fig. 7. A 4 line-to-16 line decoder 99, such as Texas Instruments decoder SN74154, provides a "0" output on one of its 16 output lines to EXCLUSIVE-OR gates 100, with the balance of the outputs being maintained at a binary "1" level. EXCLUSIVE-OR gates 100 are connected such that the EXCLUSIVE-OR gate receiving the "0" output, and all gates therebeneath, provide binary "1" outputs, while those gates above the gate receiving the binary "0" input all provide binary "0" outputs. As will become apparent, the transition from "1's" to "0's" defines the stitch point during printer operation.

The outputs supplied by decoder 60 in dependence upon its inputs are illustrated in the following Table.

| INPUTS | | | | OUTPUTS | | | | | | | | | | | | | | |
|---|---|---|---|---|---|---|---|---|---|---|---|---|---|---|---|---|---|---|
| 68 | 66 | 64 | 62 | 70 | 72 | 74 | 76 | 78 | 80 | 82 | 84 | 86 | 88 | 90 | 92 | 94 | 96 | 98 |
| 1 | 1 | 1 | 1 | 0 | 0 | 0 | 0 | 0 | 0 | 0 | 0 | 0 | 0 | 0 | 0 | 0 | 0 | 0 |
| 1 | 1 | 1 | 0 | 0 | 0 | 0 | 0 | 0 | 0 | 0 | 0 | 0 | 0 | 0 | 0 | 0 | 0 | 1 |
| 1 | 1 | 0 | 1 | 0 | 0 | 0 | 0 | 0 | 0 | 0 | 0 | 0 | 0 | 0 | 0 | 0 | 1 | 1 |
| 1 | 1 | 0 | 0 | 0 | 0 | 0 | 0 | 0 | 0 | 0 | 0 | 0 | 0 | 0 | 0 | 1 | 1 | 1 |
| 1 | 0 | 1 | 1 | 0 | 0 | 0 | 0 | 0 | 0 | 0 | 0 | 0 | 0 | 0 | 1 | 1 | 1 | 1 |
| 1 | 0 | 1 | 0 | 0 | 0 | 0 | 0 | 0 | 0 | 0 | 0 | 0 | 0 | 1 | 1 | 1 | 1 | 1 |
| 1 | 0 | 0 | 1 | 0 | 0 | 0 | 0 | 0 | 0 | 0 | 0 | 0 | 1 | 1 | 1 | 1 | 1 | 1 |
| 0 | 1 | 1 | 1 | 0 | 0 | 0 | 0 | 0 | 0 | 0 | 0 | 1 | 1 | 1 | 1 | 1 | 1 | 1 |
| 0 | 1 | 1 | 0 | 0 | 0 | 0 | 0 | 0 | 0 | 0 | 1 | 1 | 1 | 1 | 1 | 1 | 1 | 1 |
| 0 | 1 | 0 | 1 | 0 | 0 | 0 | 0 | 0 | 0 | 1 | 1 | 1 | 1 | 1 | 1 | 1 | 1 | 1 |
| 0 | 1 | 0 | 0 | 0 | 0 | 0 | 0 | 0 | 1 | 1 | 1 | 1 | 1 | 1 | 1 | 1 | 1 | 1 |
| 0 | 0 | 1 | 1 | 0 | 0 | 0 | 0 | 1 | 1 | 1 | 1 | 1 | 1 | 1 | 1 | 1 | 1 | 1 |
| 0 | 0 | 1 | 0 | 0 | 0 | 0 | 1 | 1 | 1 | 1 | 1 | 1 | 1 | 1 | 1 | 1 | 1 | 1 |
| 0 | 0 | 0 | 1 | 0 | 0 | 1 | 1 | 1 | 1 | 1 | 1 | 1 | 1 | 1 | 1 | 1 | 1 | 1 |
| 0 | 0 | 0 | 0 | 0 | 1 | 1 | 1 | 1 | 1 | 1 | 1 | 1 | 1 | 1 | 1 | 1 | 1 | 1 |
| 0 | 0 | 0 | 0 | 1 | 1 | 1 | 1 | 1 | 1 | 1 | 1 | 1 | 1 | 1 | 1 | 1 | 1 | 1 |

When a 1 output is supplied on one of the CONTROL lines to an OR gate 40, the output of the OR gate applied to its associated noninverting amplifier 36 is a 1, regardless of the data signal supplied to the OR gate. When, however, a 0 output is applied to the CONTROL input of an OR gate, the output of the OR gate assumes a binary state corresponding to the data input signals supplied thereto.

As an example, when counter 48 supplies a 1000 input to decoder 60, outputs 86-98 are maintained at a 1 binary level and CONTROL outputs (n-6) to n therefore force the outputs of the corresponding gates 40 to a 1 level, regardless of the data input. Amplifiers 36 then supply charge signals to the corresponding charge electrodes such that the jets associated therewith are switched into a continuous catch mode. The balance of the OR gates, however, are enabled by 0 control signals supplied to their control inputs, such that printing may be accomplished with these jets.

Shift registers 101 receive the output signals from lines 70-98 via inverters 102. These complemented control signals are delayed by the shift registers 101, which registers are clocked at the pixel rate by a clock signal on line 104. Each of the shift registers 101 is of an appropriate length such that this second set of gating control signals is delayed by a period of time corresponding to the time required for the print receiving medium to move from the first row of print positions 22 to the second row of print positions 24. The outputs from shift registers 101, CONTROL' 1 - CONTROL' 15, are supplied to the OR gates 42 to control deposit of drops at the second row of print positions along the overlapping print lines. Since the CONTROL' signals are the complements of the corresponding CONTROL signals, a given pixel area on an overlapping print line receives drops from only one of the two jets from the print heads 14 and 16 servicing the print line.

If it is desired to vary the stitch point randomly, a clock signal may be provided on line 50 to the counter 48 which is substantially greater in frequency and unrelated harmonically to the clock signal supplied to latch 62 on line 64. The binary number supplied to decoder 60, therefore, will be essentially random in nature. If, on the other hand, a cyclically varying signal is desired, a lower frequency clocking signal may be supplied to line 50, either at the pixel frequency or at a multiple thereof. Additionally, a counter of the type which repetitively counts up to its maximum count state and, thereafter, counts down to 0 may be utilized in place of counter 48.

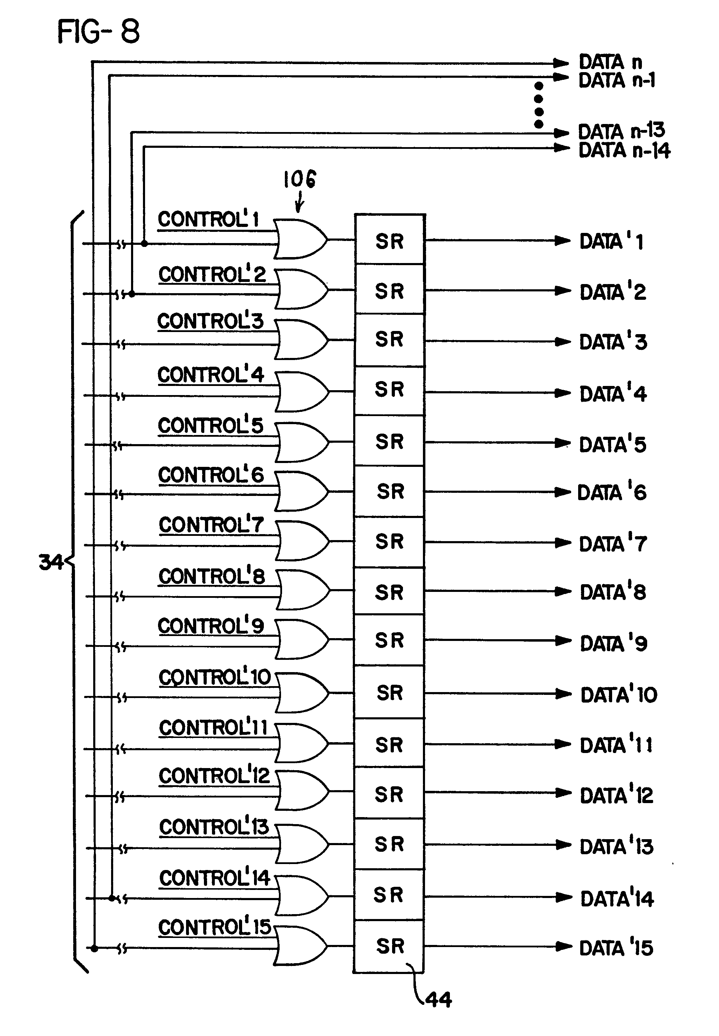

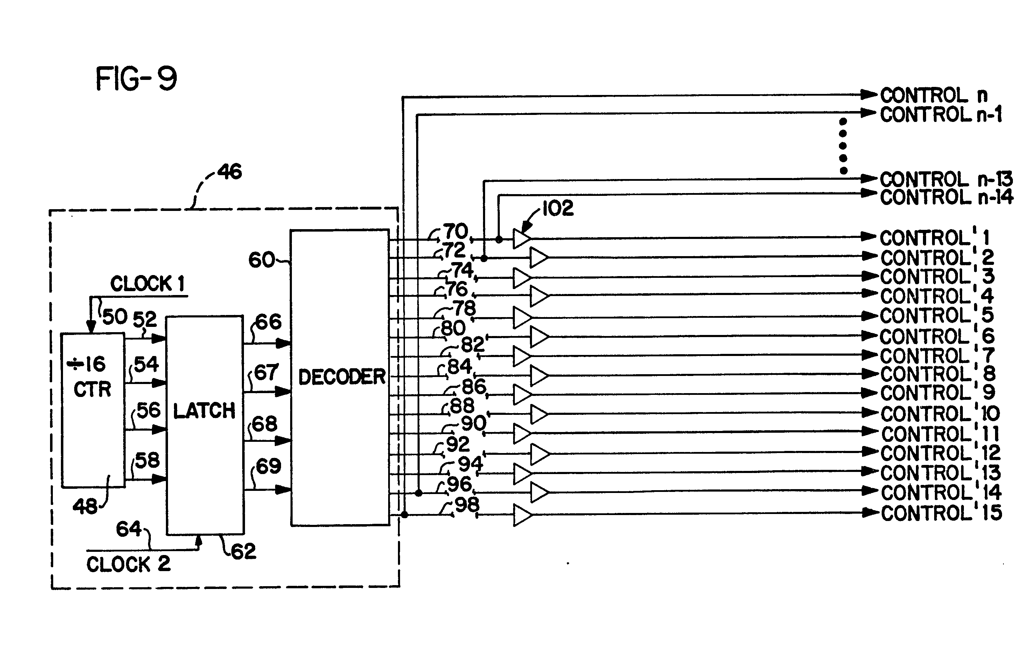

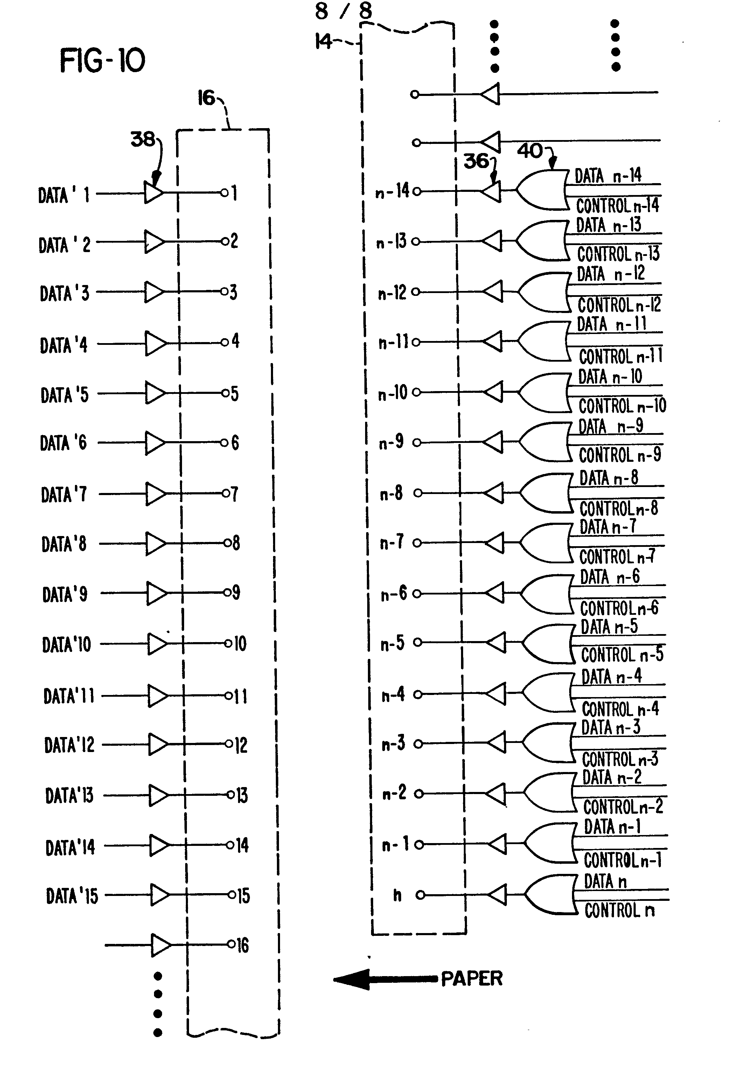

Reference is now made to Figs. 8-10 which illustrate a variation in the control circuitry of the present invention. This circuitry is similar to that illustrated in Figs. 4-6 and, consequential, corresponding circuit elements have been indicated with the same reference numerals. It should be noted that the shift register 101 has been eliminated. Rather, non-delayed CONTROL' outputs are applied to OR gates 106 to control loading of data signals into shift registers 44. As a consequence, the OR gates 42 are not utilized. Instead, the previously gated DATA' signals are applied directly to amplifiers 38. In all other respects the circuitry of Figs. 8-10 functions in a manner identical to that of the control circuitry of Figs. 4-6.

It will be appreciated that the present invention will find application in numerous ink jet printer configurations and that it is not limited to the precise printer arrangement disclosed herein. For example, the rows of print positions need not be perpendicular to the direction of movement of the print receiving medium, nor need they be parallel with respect to each other. Although a two-row printer is illustrated, the present invention will also find application in printers having a greater number of rows of jet drop streams. Additionally, although the printer disclosed is of the type in which each jet drop stream services only a single print position, the present invention will also find application in printers of the type in which each jet drop stream services a plurality of print positions.

CLAIMS

1.    An ink jet printer for depositing drops along a plurality of print lines (10) on a moving print receiving medium (12) to form a print image thereon, characterized in that said printer comprises:

print head means (14, 16) for generating jet drops directed at said print receiving medium to strike said print receiving medium at print positions (21) arranged in a first row (22), selectively depositing drops at print positions along associated ones of a first group of print lines (26) in response to print control signals, and for generating jet drops directed at said print receiving medium to strike said print receiving medium at print positions (21) arranged in a second row (24), selectively depositing drops at print positions along associated ones of a second group of print lines (28) in response to print control signals, a number of said first group of print lines overlapping a corresponding number of said second group of print lines, with the print positions in said second row which are associated with overlapping print lines being displaced in the direction of movement of said print receiving medium from the print positions in said first row which are associated with overlapping print lines,

means (34) for providing a plurality of print control signals, each print control signal controlling printing by said print head means, along an associated one of said print lines, and

dither means (Figs. 4-6), responsive to said means for providing print control signals, for supplying said print control signals to said print head means such that selected ones of said overlapping print lines are printed by deposition of drops at said first row of print positions and the remaining ones of said overlapping print lines are printed by deposition of drops at said second row of print positions, with the print lines printed by deposition of drops at each of said rows of print positions being varied during printing of said print image.

2. An ink jet printer as claimed in claim 1 further characterized in that said dither means comprises means (46, 101, 102) for supplying print control signals to control printing by deposition of drops at said first row of print positions along priht lines to one side of a stitch point and for supplying print control signals to control printing by deposition of drops at said second row of print positions along print lines to the other side of the stitch point, whereby said stitch point is varied during printing of said print image.

3. An ink jet printer as claimed in claim 1 further characterized in that said dither means comprises,

first gating means (40) for supplying print control signals to said print head means to control deposition of drops at said first row of print positions along said overlapping print lines in response to gating control signals,

second gating means (42) for supplying print control signals to said print head means to control deposition of drops at said second row of print positions along said overlapping print lines in response to gating control signals,

means (34) for supplying print control signals to said first gating means,

means (44) for supplying delayed print control signals to said second gating means, and

means (46, 101) for providing varying gating control signals to said first and second gating means, whereby said overlapping print lines of said print image are printed by depositing drops at varying ones of said first and second rows of print positions.

4.      An ink jet printer as claimed in claim 3 further characterized in that said means for providing varying gating control signals comprises

gating control signal generator means (46) for sequentially generating a first set of gating control signals,

means (70-98), responsive to said gating control signal generator means, for supplying said first set of gating control signals to said first gating means (40) for controlling deposit of drops at said first row of print positions along said overlapping print lines, and

delay means (101), responsive to said gating control signal generator means, for delaying a second set of gating control signals by a predetermined time period, and for supplying said second set of gating control signals to said second gating means (42) for controlling deposit of drops at said second row of print positions along said overlapping print lines.

5.      An ink jet printer as claimed in claim 4 further characterized in that said first set of gating control signals is the complement of said second set of gating control signals.

6.      An ink jet printer as claimed in claim 2 further characterized in that said stitch point is varied randomly.

7.      An ink jet printer as claimed in claim 2 further characterized in that said stitch point is varied cyclically.

8.    An ink jet printer as claimed in claim 1 further characterized in that said dither means comprises:

first gating means (40) for supplying print control signals to said print head means to control deposition of drops at said first row of print positions along said overlapping print lines in response to gating control signals,

second gating means (44) for supplying print control signals to said print head means to control deposition of drops at said second row of print positions along said overlapping print lines in response to gating control signals, said second gating means including means for delaying said print control signals,

means (34) for supplying print control signals to said first and second gating means, and

means (46) for providing varying gating control signals to said first and second gating means, whereby said overlapping print lines of said print image are printed by depositing drops at varying ones of said first and second rows of print positions.

9.    An ink jet printer as claimed in claim 3 or 8 further characterized in that said means for providing varying gating control signals provides randomly varying gating control signals.

10.    An ink jet printer as claimed in claim 3 or 8 further characterized in that said means for providing varying gating control signals provides cyclically varying gating control signals.

0034060

FIG-1

FIG-2

FIG-3

FIG-4

SHIFT REGISTER — DATA' 1
SR — DATA' 2
SR — DATA' 3
SR — DATA' 4
SR — DATA' 5
SR — DATA' 6
SR — DATA' 7
SR — DATA' 8
SR — DATA' 9
SR — DATA'10
SR — DATA'11
SR — DATA'12
SR — DATA'13
SR — DATA'14
SR — DATA'15

DATA n
DATA n-1
DATA n-13
DATA n-14

PIXEL CLOCK

FIG-5

# FIG-6

PAPER

FIG-7

DECODER 60

FIG-8

0034060

6 / 8

FIG-9

0034060

FIG-10

DATA ' 1
DATA ' 2
DATA '3
DATA '4
DATA '5
DATA '6
DATA '7
DATA '8
DATA '9
DATA'10
DATA'11
DATA'12
DATA'13
DATA'14
DATA'15

16

38

1
2
3
4
5
6
7
8
9
10
11
12
13
14
15
16

14

36   40

n-14
n-13
n-12
n-11
n-10
n-9
n-8
n-7
n-6
n-5
n-4
n-3
n-2
n-1
n

DATA  n-14
CONTROL n-14
DATA  n-13
CONTROL n-13
DATA  n-12
CONTROL n-12
DATA  n-11
CONTROL n-11
DATA  n-10
CONTROL n-10
DATA  n-9
CONTROL n-9
DATA  n-8
CONTROL n-8
DATA n-7
CONTROL n-7
DATA  n-6
CONTROL n-6
DATA n-5
CONTROL n-5
DATA  n-4
CONTROL n-4
DATA n-3
CONTROL n-3
DATA n-2
CONTROL n-2
DATA n-1
CONTROL n-1
DATA n
CONTROL n

◀—— PAPER

# EUROPEAN SEARCH REPORT

**European Patent Office**

Application number

**0034060**

EP 81300512.1

## DOCUMENTS CONSIDERED TO BE RELEVANT

| Category | Citation of document with indication, where appropriate, of relevant passages | Relevant to claim |
|---|---|---|
| | DE - A - 2 344 453 (IBM)<br>+ Fig. 1 +<br>& US-A-3 786 517<br>-- | 1 |
| | DE - A1 - 2 724 548 (IBM)<br>+ Fig. 1 +<br>& US-A-4 042 937<br>-- | 1 |
| | FR - A - 2 346 154 (IBM)<br>+ Page 3, lines 37-40;<br>page 4, lines 1-14; fig. 1 +<br>& US-A-4 194 210 (18-03-1980)<br>-- | 1 |
| | GB - A - 1 475 937 (LAMSON)<br>+ Page 4, lines 71-127 +<br>---- | 1 |

**CLASSIFICATION OF THE APPLICATION (Int. Cl.³)**

B 41 J 3/04

**TECHNICAL FIELDS SEARCHED (Int. Cl.³)**

B 41 J 3/04
B 41 F 17/00
G 06 K 15/00
G 06 F 3/00
G 01 D 15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims |
|---|---|

| Place of search | Date of completion of the search | Examiner |
|---|---|---|
| VIENNA | 11-05-1981 | KIENAST |

EPO Form 1503.1  06.78